# EUROPÄISCHE PATENTSCHRIFT

(11) **EP 3 927 983 B1**
(45) Veröffentlichungstag und Bekanntmachung des Hinweises auf die Patenterteilung: **04.06.2025**
(21) Anmeldenummer: 20706233.2
(22) Anmeldetag: 19.02.2020
(51) Int. Cl.: F16B 31/02, F16B 41/00, B62D 1/19, B62D 1/181, F16B 19/08

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 20.02.2019 DE 102019202297
(43) Veröffentlichungstag der Anmeldung: 29.12.2021
(73) Patentinhaber: thyssenkrupp Presta AG, 9492 Eschen (LI); thyssenkrupp AG, 45143 Essen (DE)
(72) Erfinder: BEHAM, Bryan, 9493 Mauren (LI); SCHMIDT, René Marco, 9464 Lienz (CH)
(74) Vertreter: thyssenkrupp Intellectual Property GmbH
(86) Internationale Anmeldenummer: PCT/EP2020/054353
(87) Internationale Veröffentlichungsnummer: WO 2020/169665

(56) Entgegenhaltungen:
- WO-A1-2005/028281
- DE-A1- 102004 024 876
- US-A1- 2015 232 117

## Beschreibung

### Stand der Technik

Die Erfindung betrifft eine Lenksäule für ein Kraftfahrzeug, mit einer Crashvorrichtung, die mindestens zwei Bauteile aufweist, welche einander zugewandte Flächen aufweisen, wobei die zumindest zwei Bauteile mittels eines Scherniets miteinander verbunden sind, welches in einer die Bauteile durchsetzenden Öffnung angeordnet ist, so dass bei einer relativen Bewegung der Bauteile zueinander der Scherniet entzweit wird, wobei die Flächen als Kontaktflächen ausgebildet sind, die in einer Scherebene gegeneinander anliegen, wobei die Öffnung die beiden Bauteile quer zur Scherebene durchsetzt.

Zur Anpassung der Lenkradposition an die Sitzposition des Fahrers eines Kraftfahrzeugs sind derartige Lenksäulen in unterschiedlichen Ausführungsformen im Stand der Technik bekannt. Das am hinteren Ende der Lenkspindel angebrachte Lenkrad kann bei gattungsgemäßen Lenksäulen durch eine Längenverstellung in Richtung der Lenkspindel-Längsachse in Längsrichtung im Fahrzeuginnenraum positioniert werden.

Die Längenverstellbarkeit wird dadurch realisiert, dass das Innenmantelrohr, auch als inneres Mantelrohr oder kurz Mantelrohr bezeichnet, in dem die Lenkspindel drehbar gelagert ist, relativ zur Außenmanteleinheit, auch als äußere Manteleinheit oder kurz Manteleinheit bezeichnet, in Richtung der Längsachse, d.h. in Längsrichtung teleskopartig verstellbar ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule in Längsrichtung und/oder quer dazu in Höhenrichtung zusammenschiebbar zu gestalten, wenn eine Kraft auf das Lenkrad ausgeübt wird, die einen nur im Crashfall auftretenden Grenzwert überschreitet, die sogenannte Crashkraft. Dadurch kann das Lenkrad im Crashfall ausweichen, wodurch Verletzungen der Insassen verhindert werden können.

Um für eine kontrollierte Abbremsung eines auf das Lenkrad auftreffenden Körpers zu sorgen, kann weiterhin zwischen zwei Bauteilen der Lenksäule, die beim Zusammenschieben der Lenksäule relativ zueinander bewegt werden, eine Energieabsorptionseinrichtung eingekoppelt sein, beispielsweise zwischen der Außenmanteleinheit und dem Innenmantelrohr oder damit jeweils verbundenen Bauteilen, und/oder zwischen der die Lenkspindel tragenden Stelleinheit und einer Trageinheit zur Verbindung mit der Karosserie, oder damit jeweils verbundenen Bauteilen. Diese kann die eingeleitete kinetische Energie in plastische Verformung eines oder mehrerer Energieabsorptionselemente umsetzen, beispielsweise durch Aufreißen einer Reißlasche oder Verbiegen eines langgestreckten Biegeelements, etwa eines Biegedrahts oder Biegestreifens.

Die im Crashfall relativ zueinander bewegbaren Bauteile sind über ein Sollbruchelement miteinander verbunden, welches im Normalbetrieb auf das Lenkrad einwirkenden Kräfte aufnimmt und verhindert, dass die Lenksäule zusammengeschoben wird, und eine gegebenenfalls vorhandene Energieabsorptionsvorrichtung anspricht. Nur bei Überschreitung einer vorgegebenen Grenzkraft, die im Crashfall auftritt, bricht das Sollbruchelement und gibt die relative Bewegung der Bauteile frei, so dass die Lenksäule zusammengeschoben werden kann, wobei eine gegebenenfalls eingesetzte Energieabsorptionsvorrichtung aktiviert werden kann.

Es ist im Stand der Technik beispielsweise aus der US 2015/0232117 A1 bekannt, dass die beiden Bauteile mit ihren gegeneinander gerichteten Flächen, die als Kontaktflächen ausgebildet sind, in einer Ebene parallel zur relativen Bewegung im Crashfall, der sogenannten Scherebene gegeneinander anliegen und von dem Scherelement zusammen gehalten werden. Das Scherelement erstreckt sich durch eine die Bauteile quer, bevorzugt senkrecht die Scherebene durchsetzende Öffnung, und ist beispielsweise durch außen an den Bauteilen abgestützte Scherelementköpfe, beispielsweise Nietköpfe, in Durchgangsrichtung der Öffnung fixiert. Überschreitet die Grenzkraft im Crashfall die Scherfestigkeit des Scherelements, wird das Scherelement zwischen den Scherkanten am Rand der Öffnung zu den Kontaktflächen in der Scherebene abgeschert, d.h. in zwei separate Scherelementfragmente, kurz Bruchstücke oder Fragmente genannt, durchtrennt, und die Bauteile können relativ zueinander in der Scherebene gleiten. Nachteilig dabei ist, dass die dann losen Scherelementfragmente unkontrolliert nach außen aus der Öffnung herausfallen und sich frei in der Lenksäule oder der Fahrgastzelle des Kraftfahrzeugs bewegen können, und die Funktion von Lenksäule und Energieabsorptionseinrichtung stören und beeinträchtigen können und sogar zu Verletzung des Fahrzeugführers führen können.

Aus der DE 10 2004 024876 A1 oder der WO 2005/028281 A1 ist ebenfalls der Einsatz von Scherelementen bekannt, wobei ebenfalls die genannten Probleme auftreten können.

Angesichts der vorangehend erläuterten Problematik ist es eine Aufgabe der vorliegenden Erfindung, eine verbesserte Sollbruchverbindung mit Scherelement anzugeben, und die Betriebssicherheit zu erhöhen.

### Darstellung der Erfindung

Diese Aufgabe wird erfindungsgemäß gelöst durch eine Lenksäule für ein Kraftfahrzeug mit den Merkmalen des Anspruchs 1 und ein Verfahren nach Anspruch 9. Vorteilhafte Weiterbildungen ergeben sich aus den Unteransprüchen.

Bei einer Lenksäule für ein Kraftfahrzeug, mit einer Crashvorrichtung, die mindestens zwei Bauteile aufweist, welche einander zugewandte Flächen aufweisen, wobei die zumindest zwei Bauteile mittels eines Scherniets miteinander verbunden sind, welches in einer die Bauteile durchsetzenden Öffnung angeordnet ist, so dass bei einer relativen Bewegung der Bauteile zueinander der Scherniet entzweit wird, wobei in mindestens einem an einer der Fläche angrenzenden Randbereich, eine sich zumindest über einen Umfangsteilbereich erstreckende, eine zu der jeweiligen anderen Kontaktfläche hin offene Aufweitung aufweist, wobei die Flächen als Kontaktflächen ausgebildet sind, die in einer Scherebene gegeneinander anliegen, wobei die Öffnung die beiden Bauteile quer zur Scherebene durchsetzt ist erfindungsgemäß vorgesehen, dass Aufweitungen auf den beiden einander gegenüberliegenden Kontaktflächen beider Bauteile vorgesehen sind.

Die durchsetzende Öffnung erstreckt sich durch die mittels des Scherniets miteinander verbundenen Bauteile, und ist gebildet durch jeweilige Einzelöffnungen in jedem Bauteil, die sich zumindest teilweise überdecken, bevorzugt zueinander koaxial sind bzw. fluchten.

Die Flächen sind als Kontaktflächen ausgebildet, die in einer Scherebene gegeneinander anliegen, wobei die Öffnung die beiden Bauteile quer zur Scherebene durchsetzt. Die relative Bewegung der Bauteile erfolgt dann als Scherbewegung parallel zur Scherebene.

Erfindungsgemäß sind Aufweitungen auf den beiden einander gegenüberliegenden Kontaktflächen beider Bauteile vorgesehen.

An ihrem Öffnungsrand kann die Öffnung am Übergang zu mindestens einer Fläche oder Kontaktfläche eine Scherkante aufweisen, die ausgebildet ist zum Abscheren des Scherelements bei einer relativen Bewegung der Bauteile parallel zu der Fläche, bevorzugt bei einer relativen Scherbewegung parallel zur Scherebene. Erfindungsgemäß kann im Bereich mindestens einer Scherkante an an beiden Bauteilen, der Öffnungsquerschnitt in einem an die Fläche bzw. Kontaktfläche angrenzenden Aufweitungsbereich zur Bildung der Aufweitung lokal vergrößert sein. Beispielsweise kann im Randbereich der Öffnung, der zwischen der Innenfläche der Öffnung und der Kontaktfläche gebildet ist, eine sich zumindest teilweise über den Umfang der Öffnung erstreckende Ausnehmung oder Vertiefung ausgebildet sein, so dass dort im Bereich der Aufweitung der Öffnungsquerschnitt in radialer Richtung, d.h. quer zur Durchgangsrichtung der Öffnung vergrößert ist. Dadurch wird im Verbindungszustand, solange das Scherelement intakt ist, zwischen dem Scherelement und der Innenfläche der Öffnung im Bereich der Aufweitung ein freier Raum gebildet. Dieser freie Raum, im Folgenden auch als Verformungsraum bezeichnet, umgibt das Scherelement zumindest abschnittweise in der Scherebene. Der Verformungsraum kann einfach dadurch bereitgestellt werden, dass der Öffnungsquerschnitt durch Bearbeitung von der Kontaktfläche aus lokal vergrößert ist.

Bie einer relativen Bewegung der Bauteile parallel zu deren gegeneinander gerichteten Flächen, wird das Scherelement zwischen den Bauteilen abgeschert und dadurch entzweit bzw. getrennt, also in zwei Scherelementfragmente geteilt.

Bevorzugt füllt das Scherelement den Durchgangsquerschnitt der Öffnung, dies ist der Öffnungsquerschnitt außerhalb der Aufweitung, überwiegend, d.h. mit geringem Spiel im Wesentlichen voll aus, sprich zu mindestens 95%. Hohlräume im Scherelement selbst werden dabei bevorzugt nicht berücksichtigt. Im Stand der Technik liegt dadurch das Scherelement im normalen Verbindungszustand im Bereich der Scherebene an den am Öffnungsrand liegenden Scherkanten der Öffnungen an. Dadurch wird beim Überschreiten der Scherkraft im Crashfall das Scherelement bereits bei einem minimalen Scherversatz in der Scherebene sauber und glatt durchtrennt, so dass die so gebildeten Scherelementfragmente entgegen der Normalenrichtung der Kontaktflächen aus den Öffnungen in Durchgangsrichtung herausbewegt und nach außen aus den Bauteilen herausfallen können.

Dagegen ist erfindungsgemäß durch die Aufweitung der Abstand quer zur Durchgangsrichtung zwischen dem Außenumfang des Scherelements und dem Innenumfang der Öffnung im Bereich der Scherkanten zur Bildung eines Verformungsraums definiert vergrößert. Im Crashfall erfolgt dadurch zunächst eine plastische Verformung des Scherelements im Bereich der Flächen bzw. der Kontaktflächen / Scherebene, bei der das Material des Scherelements durch die Scherlast zunächst quer zur Durchgangsrichtung fließt und dadurch in den durch die Aufweitung bereitgestellten Verformungsraum plastisch hineingepresst wird und diesen dann zumindest teilweise ausfüllt. Erst nach dem zumindest partiellen Ausfüllen der Aufweitung erfolgt durch eine weitere relative Bewegung der Bauteile ein Abscheren des Scherelements.

Durch das plastische Einpressen des Scherelements in den Verformungsraum der erfindungsgemäßen Aufweitung wird beim Abscheren ein definierter, quer zur Durchgangsrichtung abstehender Haltegrat an dem Scherelementfragment gebildet. Die Aufweitung ist so bemessen, dass der Haltegrat im Bereich der Aufweitung über den Öffnungsquerschnitt außerhalb der Aufweitung quer vorsteht, und dadurch ein Formschlusselement bildet, welches das Scherelementfragment in Durchgangsrichtung entgegen der Normalenrichtung der Kontaktfläche formschlüssig in der Öffnung hält. Der Haltegrat bildet eine Art Nietkopf, mit dem das beim Abscheren des Scherelements gebildete Scherelementfragment entgegen der Normalenrichtung der Kontaktfläche in der Öffnung gehalten wird. Dadurch ist das Scherelementfragment zwischen dem erfindungsgemäß gebildeten Haltegrat und einem an einer der Kontaktfläche abgewandten Außenfläche abgestützten Scherelementkopf an dem Bauteil gesichert, und kann nicht unkontrolliert aus der Öffnung herausfallen. Die Normalenrichtung ist die Richtung, die orthogonal auf der Fläche bzw. Kontaktfläche steht, und deren Richtungssinn von der Fläche weg in Richtung der anderen Fläche zeigt.

Der zur Ausbildung des erfindungsgemäßen Haltegrats zur Verfügung stehende Verformungsraum wird durch den freien Querschnitt zwischen dem Scherelement und der Innenfläche der Aufweitung bestimmt. Die Ausbildung von Aufweitungen an den Flächen bzw. an den beiden Kontaktflächen hat den Vorteil, dass jedes der beim Abscheren gebildeten Scherelementfragmente jeweils formschlüssig an dem jeweiligen Bauteil fixiert ist.

Bevorzugt hat die Öffnung einen zumindest abschnittweise im Wesentlichen gleichbleibenden Durchgangsquerschnitt, der im Bereich der Aufweitung zur Fläche bzw. Kontaktfläche hin vergrößert ist. Der Durchgangsquerschnitt entspricht dem vorgenannten Öffnungsquerschnitt außerhalb der Aufweitung, der bevorzugt von dem Scherelement im Wesentlichen ausgefüllt ist. Zur Ausbildung der Aufweitung kann der Durchgangsquerschnitt einfach einem Aufweitungsabschnitt vergrößert sein. Dabei erstreckt sich der Aufweitungsabschnitt bevorzugt in einem Bauteil über einen Teilbereich der Länge der Öffnung, welche in Durchgangsrichtung der Öffnung quer zur Scherebene gemessen der Dicke des Bauteils zwischen dessen Kontaktfläche und einer Außenfläche entspricht. Der Durchgangsquerschnitt außerhalb der Aufweitung ist dann im Wesentlichen gleichbleibend, wenn der flächeninhaltsmäßig kleinste Durchgangsquerschnitt maximal 20% kleiner ist als der flächeninhaltsmäßig größte Durchgangsquerschnitt.

Die Länge des Aufweitungsabschnitts in Durchgangsrichtung der Öffnung ist bevorzugt kleiner 50% der Dicke des Bauteils, gemessen zwischen der Fläche bzw. der Kontaktfläche und einer davon abgewandten Außenflächen. An der Kontaktfläche ist der Austrittsquerschnitt der Aufweitung, entsprechend dem Querschnitt des Verformungsraums und damit des Haltegrats, größer als der kleinste Durchgangsquerschnitt. Unter Querschnitte sind bevorzugt Querschnittsflächeninhalte zu verstehen.

Es kann vorgesehen sein, dass die Aufweitung eine Fase und/oder eine Rundung und/oder einen Absatz aufweist. Als Fase kann der Öffnungsrand zur Kontaktfläche konisch oder gerundet ausgebildet sein. Durch eine konische Fase kann eine im Wesentlichen trichterförmig zur Kontaktfläche hin offene Aufweitung der Öffnung ausgebildet werden.

Es ist vorteilhaft, dass die Fase mit einer Öffnungsachse der Öffnung einen Fasenwinkel von größer oder gleich 20° einschließt, bevorzugt von 30°. Als Öffnungsachse wird eine in Durchgangsrichtung der Öffnung verlaufende Achse angesehen, bevorzugt parallel zur Normalenrichtung der Kontaktfläche. Falls die Öffnung beispielsweise als kreiszylindrische Bohrung ausgebildet ist, ist die Öffnungsachse identisch mit der Bohrungsachse. Dadurch wird sichergestellt, dass eine Aufweitung, die zur Ausbildung eines Haltegrats zur Erzeugung eines sicheren Formschlusses ausreichend ist, in einem relativ kurzen Aufweitungsabschnitt realisiert werden kann. Außerdem kann eine sichere plastische Einformung in den Verformungsraum gewährleistet werden zur Ausbildung des Haltegrats, ohne ein unerwünschtes vorzeitiges Abscheren.

Alternativ oder zusätzlich kann der Öffnungsrand eine Rundung aufweisen. Die Rundung kann umlaufend oder zumindest abschnittweise torusförmig-konvex ausgebildet sein, also im Querschnitt bogenförmig. Die bogenförmige Rundung hat den Vorteil, dass die plastische Verformung beim Ausfüllen der Aufweitung allmählich entlang einer Biegung erfolgt, und Kerbwirkungen, die an einer scharfen Kante auftreten könnten, verringert werden können. Bevorzugt kann die Rundung einen Radius von größer gleich 0,5 mm besonders bevorzugt größer gleich 1 mm aufweisen.

Alternativ oder zusätzlich kann der Öffnungsrand einen Absatz aufweisen, der als zumindest teilweise umlaufende Stufe ausgebildet sein kann. Eine derartige Stufe kann beispielsweise dadurch realisiert werden, dass die Aufweitung eine in die Kontaktfläche eingebrachte Stufenbohrung aufweist, welche einen größeren Durchmesser hat, den Aufweitungsdurchmesser, der größer ist als der Öffnungsquerschnitt, der bei einer runden Öffnung dem Öffnungs- bzw. Durchgangsdurchmesser entspricht.

Die Öffnung kann als Bohrung mit kreisrundem Querschnitt ausgebildet sein. Die Bohrung hat einen Bohrungs- oder Öffnungsdurchmesser, der in der Aufweitung zur Kontaktfläche hin auf einen relativ dazu größeren Aufweitungsdurchmesser vergrößert ist. Beispielsweise kann die Bohrung durch eine konische Fase konisch-trichterförmig aufgeweitet sein. Es kann auch eine von der Kontaktfläche eingebrachte Stufenbohrung vorgesehen sein, wobei zwischen dem größeren Aufweitungsdurchmesser und dem Bohrungsdurchmesser ein Absatz oder eine Stufe gebildet ist. An die Bohrung angepasst kann das Scherelement ebenfalls einen kreisrunden Querschnitt haben mit einem Scherelementdurchmesser, so dass es den Bohrungsquerschnitt mit geringem Spiel überwiegend also im Wesentlichen ausfüllt.

Es ist denkbar und möglich, dass zur optimierten Ausbildung des Haltegrads und zur Anpassung der Abschercharakteristik auf den beiden gegeneinander anliegenden Kontaktflächen unterschiedlich gestaltete Aufweitungen miteinander kombiniert werden, beispielsweise ein konischer Öffnungsrand auf der einen Seite mit einem gerundeten Öffnungsrand auf der anderen Kontaktfläche.

Die Aufweitung kann sich über den ganzen Umfang der Öffnung erstrecken, oder über Umfangsteilbereiche. Bevorzugt befinden sich aufgeweitete Umfangsteilbereiche in der Scherrichtung, d.h. in Richtung der gegenseitigen Scherbewegung der beiden Bauteile. Es wird eine partielle Schergeometrie realisiert, welche eine optimierte Einleitung der Scherkraft ermöglicht.

Bevorzugt kann das Scherelement als Niet ausgebildet sein. Ein Niet kann beispielsweise als Vollniet, Hohl- oder Rohrniet, Halbhohlniet, Schließringniet oder dergleichen ausgebildet sein, bei dem an einem die Öffnung durchsetzenden Nietschaft beiderseits außerhalb der beiden Bauteile Nietköpfe plastisch geformt sind, welche sich jeweils auf den Außenseiten der Bauteile in Durchgangsrichtung der Öffnung formschlüssig abstützen. Bevorzugt hat der Niet einen an den runden Öffnungsquerschnitt angepassten runden Nietquerschnitt. Dadurch dass der Niet zumindest im Bereich der Scherebene einen definierten Voll- oder Hohlquerschnitt hat, aus einem Material mit definierter Scherfestigkeit, die geringer ist als die Festigkeit des Materials zumindest eines der beiden Bauteile, kann das Wegbrech- oder Losbrechverhalten der Scherverbindung definiert vorgegeben werden.

Es kann vorteilhaft sein, dass das eine Bauteil mit einer eine Lenkspindel drehbar lagernden Manteleinheit verbunden ist, und das andere Bauteil mit einer die Manteleinheit tragenden, mit der Karosserie eines Kraftfahrzeugs verbindbaren Trageinheit verbunden ist. Das eine Bauteil kann beispielsweise mit einem Mantelrohr verbunden sein, welches im Crashfall in Richtung der Längsachse der Lenksäule, um welche die Lenkspindel drehbar ist, relativ zu einem anderen Bauteil teleskopartig zusammenschiebbar ist, welches seinerseits verbunden ist mit einer direkt oder mittelbar an der Karosserie eines Kraftfahrzeugs in Längsrichtung abgestützten Manteleinheit oder einer Trageinheit.

Es ist vorteilhaft, dass das Scherelement zumindest im Bereich der Scherebene aus einem Material ausgebildet ist, welches eine geringere Festigkeit als das Material zumindest einer der Bauteile hat, bevorzugt eine geringere Festigkeit als das Materialien der Bauteile. Falls beispielsweise die Bauteile aus Stahl gefertigt sind, kann das Scherelement beispielsweise aus Aluminium, Buntmetall, Kunststoff oder dergleichen gefertigt sein. Werden für die Bauteile andere Werkstoffe eingesetzt, kann die Scherfestigkeit des Scherelements daran angepasst sein, so dass sichergestellt ist, dass im Crashfall das Scherelement sicher durchtrennt wird, und beim Abscheren keine Schäden an den Bauteilen auftreten.

Eine vorteilhafte Ausführung der Erfindung sieht vor, dass zwischen den Bauteilen ein Energieabsorptionselement angeordnet ist. In dieser Anordnung bildet das Scherelement ein Sollbruchelement, welches bezüglich der Kraftübertragung in Richtung der Scherbewegung im Crashfall parallel zu mindestens einem Energieabsorptionselement angeordnet ist, und dafür sorgt, dass die im Normalbetrieb zwischen den beiden Bauteilen auftretenden Kräfte aufgenommen werden, und nicht auf das Energieabsorptionselement einwirken können. Nur bei Überschreitung einer vorgegebenen Grenzkraft, die im Crashfall auftritt, wird das Scher-element abgeschert und gibt die relative Bewegung der beiden Bauteile frei, so dass das oder die Energieabsorptionselemente zur Absorption kinetischer Energie verformt werden können. Das Energieabsorptionselement kann beispielsweise zwischen Außenmanteleinheit und Innenmantelrohr eingesetzt und abgestützt sein, so dass im Crashfall nach dem Abscheren des Scherelements ein abgebremstes teleskopartiges Zusammenschieben der Lenksäule ermöglicht wird. Als Energieabsorptionselemente sind im Stand der Technik beispielsweise Biege- und/oder Reißlaschen, Quetsch-, Trenn- oder Aufweitungselemente in vielfältigen Ausführungen bekannt, welche über einen vorgegebenen Verformungsweg eine Umsetzung von kinetischer Energie in plastische Verformungsarbeit ermöglichen. Bezogen auf die erfindungsgemäße Gestaltung erstreckt sich der Verformungsweg in der Scherrichtung, beispielsweise der Längsrichtung einer teleskopierbaren Lenksäulenanordnung.

Die Erfindung bezieht sich weiterhin auf ein Verfahren zum Betrieb einer Lenksäule für ein Kraftfahrzeug, mit einer Crashvorrichtung, die mindestens zwei Bauteile aufweist, welche einander zugewandten Flächen aufweisen, und die mittels eines Scherelements miteinander verbunden sind, welches in einer beide Bauteile zumindest teilweise durchsetzenden Öffnung angeordnet ist, die am Übergang zu mindestens einer Fläche eine Scherkante aufweist, wobei beim Überschreiten einer vorgegebenen, zwischen den Bauteilen wirkenden Crashkraft das Scherelement abgeschert und in zwei Scherelementfragmente zerteilt wird, wobei erfindungsgemäß vorgeschlagen wird, dass zumindest eines der Scherelementfragmente plastisch eingeformt wird in eine in mindestens einem an eine Fläche angrenzenden Randbereich der Öffnung ausgebildeten Aufweitung, zur Bildung eines Haltegrats, der einen in Durchgangsrichtung der Öffnung wirksamen Formschluss zwischen dem Scherelementfragment und dem Bauteil erzeugt.

Bevorzugt wird ein Verfahren zum Betrieb einer Lenksäule für ein Kraftfahrzeug vorgeschlagen, mit einer Crashvorrichtung, die zwei Bauteile aufweist, welche einander zugewandten Kontaktflächen in einer Scherebene gegeneinander anliegen, und die mittels eines Scherelements miteinander verbunden sind, welches in einer beide Bauteile quer zur Scherebene durchsetzenden Öffnung angeordnet ist, die am Übergang zu mindestens einer Kontaktfläche eine Scherkante aufweist, wobei beim Überschreiten einer vorgegebenen, zwischen den Bauteilen in Richtung der Scherebene wirkenden Crashkraft das Scherelement abgeschert und in zwei Scherelementfragmente zerteilt wird, wobei erfindungsgemäß vorgeschlagen wird, dass zumindest eines der Scherelementfragmente plastisch eingeformt wird in eine in mindestens einem an eine Kontaktfläche angrenzenden Randbereich der Öffnung ausgebildeten Aufweitung, zur Bildung eines Haltegrats, der einen in Durchgangsrichtung der Öffnung wirksamen Formschluss zwischen dem Scherelementfragment und dem Bauteil erzeugt.

Wie vorangehend beschrieben weist die Öffnung zumindest an einer, bevorzugt an beiden Kontaktflächen eine sich zumindest über einen Umfangsteilbereich erstreckende, zur Kontaktfläche hin offene Aufweitung auf. Beim erfindungsgemäßen Verfahren wird im Crashfall zunächst ein Teil der zwischen den Bauteilen in der Scherrichtung einwirkenden kinetischen Energie genutzt, um das Scherelement im Bereich der Scherebene in den erfindungsgemäß dort im Bereich der Aufweitung gebildeten Verformungsraum plastisch einzupressen. Dadurch wird an dem Scherelement ein Haltegrat plastisch umgeformt, der über den Öffnungsquerschnitt außerhalb der Aufweitung quer vorsteht. Nach oder teilweise während der plastischen Umformung zur Bildung des Haltegrats erfolgt das Abscheren des Scherelements, an außen am Rand der Aufweitung zur Kontaktfläche angeordneten Scherkanten. Dank der Umformung in der erfindungsgemäßen Aufweitung weist eines oder beide der Scherelementfragmente einen Haltegrat auf, der für eine in Durchgangsrichtung formschlüssige Fixierung mit dem oder den Bauteilen sorgt.

Durch die erfindungsgemäße Aufweitung kann im Crashfall durch die Crashenergie eine plastische Umformung des Scherelements erfolgen, welches eine sichere Fixierung der Scherelementfragmente ermöglicht, und dadurch Störungen der Energieabsorption vermeidet. Dadurch kann das Sicherheitsniveau erhöht werden.

### Beschreibung der Zeichnungen

Vorteilhafte Ausführungsformen der Erfindung werden im Folgenden anhand der Zeichnungen näher erläutert. Im Einzelnen zeigen:
Figur 1 eine erfindungsgemäße Lenksäule in einer perspektivischen Darstellung,
Figur 2 die Lenksäule gemäß Figur 1 in einer weiteren perspektivischen Darstellung,
Figur 3 eine Detailansicht der Lenksäule gemäß Figur 1 in auseinander gezogener Darstellung,
Figur 4 einen Querschnitt durch die Lenksäule gemäß Figuren 1 bis 3,
Figur 5 eine vergrößerte nicht erfindungsgemäße Detailansicht aus Figur 4,
Figur 6 eine vergrößerte schematische Darstellung ähnlich Figur 4 einer nicht erfindungsgemäßen Schernietverbindung in einer ersten Ausführungsform im Normalbetrieb vor dem Abscheren,
Figur 7 eine nicht erfindungsgemäße Darstellung der Schernietverbindung gemäß Figur 6 nach dem Abscheren,
Figur 8 eine vergrößerte schematische Darstellung wie in Figur 6 einer erfindungsgemäßen Schernietverbindung in einer zweiten Ausführungsform im Normalbetrieb vor dem Abscheren,
Figur 9 eine Darstellung der Schernietverbindung gemäß Figur 8 nach dem Abscheren,
Figur 10 eine vergrößerte schematische Darstellung wie in Figur 6 einer erfindungsgemäßen Schernietverbindung in einer dritten Ausführungsform,
Figur 11 eine vergrößerte schematische Darstellung wie in Figur 6 einer erfindungsgemäßen Schernietverbindung in einer vierten Ausführungsform,
Figur 12 eine vergrößerte schematische Darstellung wie in Figur 6 einer erfindungsgemäßen Schernietverbindung in einer fünften Ausführungsform,
Figur 13 eine schematische Ansicht auf eine Kontaktfläche in Durchgangsrichtung der Öffnung in einer ersten Ausführung,
Figur 14 eine schematische Ansicht auf eine Kontaktfläche in Durchgangsrichtung der Öffnung in einer ersten Ausführung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

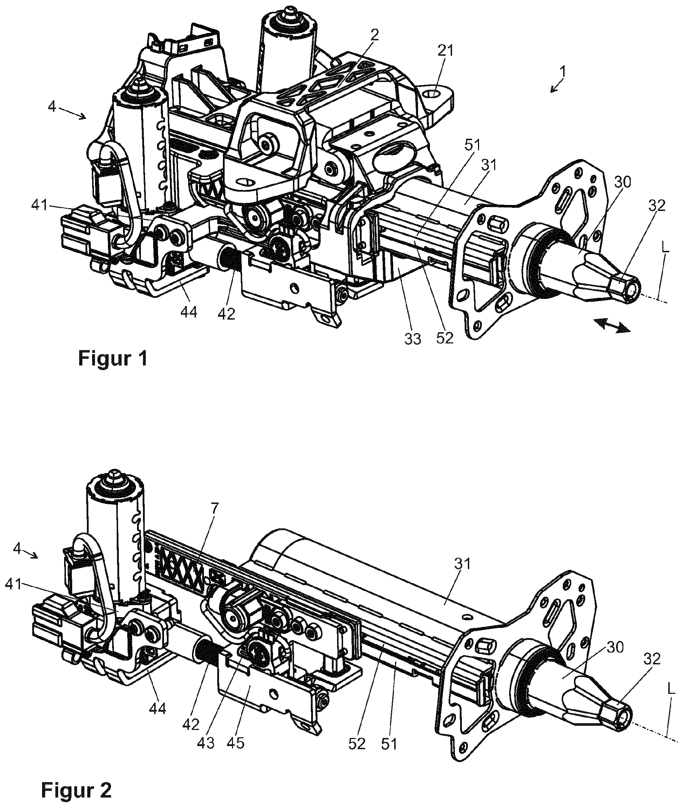

Figur 1 zeigt eine erfindungsgemäße Lenksäule 1 schematisch in perspektivischer Ansicht schräg von hinten (bezogen auf die Fahrtrichtung eines nicht gezeigten Kraftfahrzeugs).

Die Lenksäule 1 kann an der Karosserie eines nicht dargestellten Kraftfahrzeugs mittels einer Trageinheit (Konsole) 2 befestigt werden. Die Trageinheit 2 umfasst zur Verbindung mit der Karosserie Befestigungsmittel 21, beispielsweise Befestigungsöffnungen.

Eine Lenkspindel 30 ist in einem Innenmantelrohr 31, auch als inneres Mantelrohr oder Mantelrohr 31 bezeichnet, um ihre Längsachse L, die sich in Längsrichtung erstreckt, drehbar gelagert. Hinten an der Lenkspindel 30 ist ein Befestigungsabschnitt 32 zur Befestigung eines nicht dargestellten Lenkrads ausgebildet. Das Innenmantelrohr 31 ist in einer Außenmanteleinheit 33, auch als äußere Manteleinheit 33 oder kurz Manteleinheit 33, in Längsrichtung teleskopartig verschiebbar gehaltert, wie mit dem Doppelpfeil parallel zur Längsachse L angedeutet.

Ein motorischer Verstellantrieb 4 umfasst eine elektrische Antriebseinheit 41 mit einem Elektromotor, die sich an der Außenmanteleinheit 33 in Längsrichtung mittels eines bügelartigen Abstützbauteils 44 abstützt und von der eine sich im Wesentlichen in Längsrichtung erstreckende Gewindespindel (Spindel) 42 drehend antreibbar ist, die in eine bezüglich dazu drehfest angeordnete Spindelmutter 43 eingeschraubt ist, die sich an dem Innenmantelrohr 31 in Längsrichtung über ein Stützelement 45 abstützt. Dadurch wird ein sogenannter Rotationsspindeltrieb realisiert, bei dem durch drehenden Antrieb der Gewindespindel 42 mittels der Antriebseinheit 41 der Abstand in Längsrichtung zwischen Antriebseinheit 41 und Spindelmutter 43 verstellbar ist. Durch Aktivierung der Antriebseinheit 41 kann das Innenmantelrohr 31 relativ zur Außenmanteleinheit 33 zur Längsverstellung der Lenksäule 1 teleskopartig ein- oder ausgefahren werden, wie mit einem Doppelpfeil angedeutet ist.

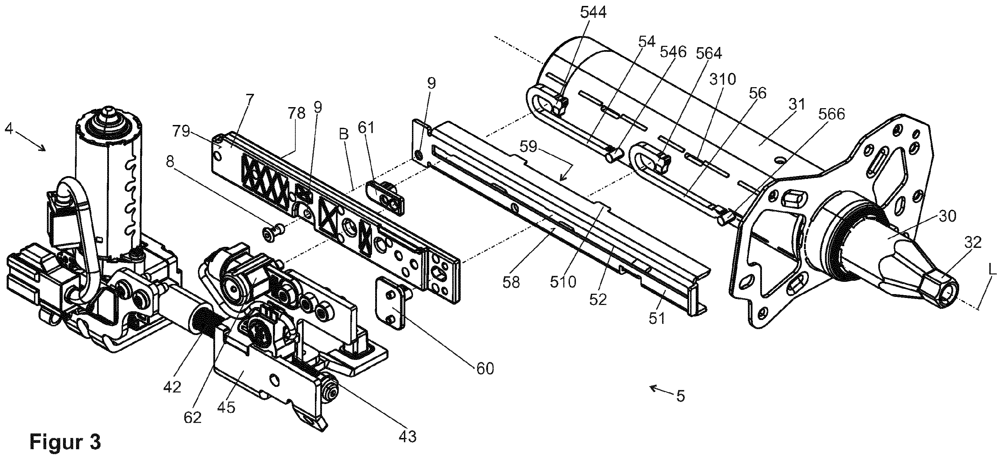

Zwischen der Außenmanteleinheit 33 und dem Innenmantelrohr 31 ist eine Energieabsorptionseinrichtung 5 angeordnet, die im Folgenden näher erläutert wird. Diese ist in Figur 2 erkennbar, in der zur besseren Übersicht in derselben Perspektive wie in Figur 1 die Trageinheit 2 und die Außenmanteleinheit 33 weggelassen sind. Figur 3 zeigt eine quer zur Längsachse L auseinander gezogene Explosionsdarstellung der Anordnung aus Figur 2.

Die Energieabsorptionsvorrichtung 5 weist ein Gehäuse 51, auch als Halteprofil 51 bezeichnet, in Form einer C-förmigen Schiene mit im Wesentlichen rechteckigem Querschnitt auf, welches fest mit dem Innenmantelrohr 31 verbunden ist und sich in Längsrichtung erstreckt, wobei der offene Querschnitt gegen die Außenseite des Innenmantelrohrs 31 gerichtet ist. Mittels Formschlusselementen 510, die in korrespondierende Aufnahmeöffnungen 310 in dem inneren Mantelrohr 31 eingreifen, ist das Gehäuse 51 fest mit dem Mantelrohr 31 verbunden, beispielsweise mittels Laserschweißen. Auf seiner radial nach außen gerichteten Außenseite weist das Gehäuse 51 einen sich parallel zur Längsachse L erstreckenden Schlitz 52 auf.

In dem Gehäuse 51 sind ein erstes Energieabsorptionselement 54 und ein zweites Energieabsorptionselement 56 mit Abstand in Längsrichtung angeordnet, die jeweils als U-förmiger Biegedraht bzw. Biegestreifen gestaltet sind, mit einem ersten Schenkel, der über eine Umbiegung von im Wesentlichen 180° mit einem zweiten Schenkel verbunden ist. Am Ende des zweiten Schenkels ist jeweils ein Mitnehmerhaken 544 bzw. 564 ausgebildet. Jeweils mit ihrem ersten Schenkel stützen sich die Energieabsorptionselemente 54 und 56 entgegen der Längsrichtung gegen nach innen in den Querschnitt des Gehäuses 51 vorspringende Widerlager 546 bzw. 566 ab, welche jeweils einen Anschlag in Längsrichtung bilden.

Die Energieabsorptionselemente 54 und 56 können als Stanzteile ausgebildet sein, so dass eine kostengünstige Herstellung gewährleistet ist.

Das Gehäuse 51 bildet ein erstes Bauteil im Sinne der vorliegenden Erfindung, welches fest mit dem Innenmantelrohr 31 verbunden ist. Das Gehäuse 51 hat eine parallel zur Längsachse L, bezüglich des Innenmantelrohrs 31 außen liegende Kontaktfläche 58, die in Figur 3 dem Betrachter zugewandt ist.

Eine Trägerplatte 7 weist eine Kontaktfläche 78 auf, welche parallel zur Kontaktfläche 58 steht, und im montierten Zustand in einer Scherebene S flächig gegen die Kontaktfläche 58 des Gehäuses 51 anliegt, wie weiter unten noch näher erläutert wird.

Die Spindelmutter 43 ist über das Stützelement 45 mit der Trägerplatte 7 verbunden und in Längsrichtung abgestützt.

Ein erstes Koppelelement 60 ist in Längsrichtung fest an der Trägerplatte 7 abgestützt und erstreckt sich durch den Schlitz 52 hindurch, und ist mit dem Mitnehmerhaken 564 des Energieabsorptionselements 56 verbunden.

Ein zweites Koppelelement 61 kann mittels eines pyroelektrischen Aktuators 62, der fest mit der Trägerplatte 7 verbunden ist, durch den Schlitz 52 hindurch mit dem Mitnehmerhaken 544 des Energieabsorptionselements 54 gekoppelt werden.

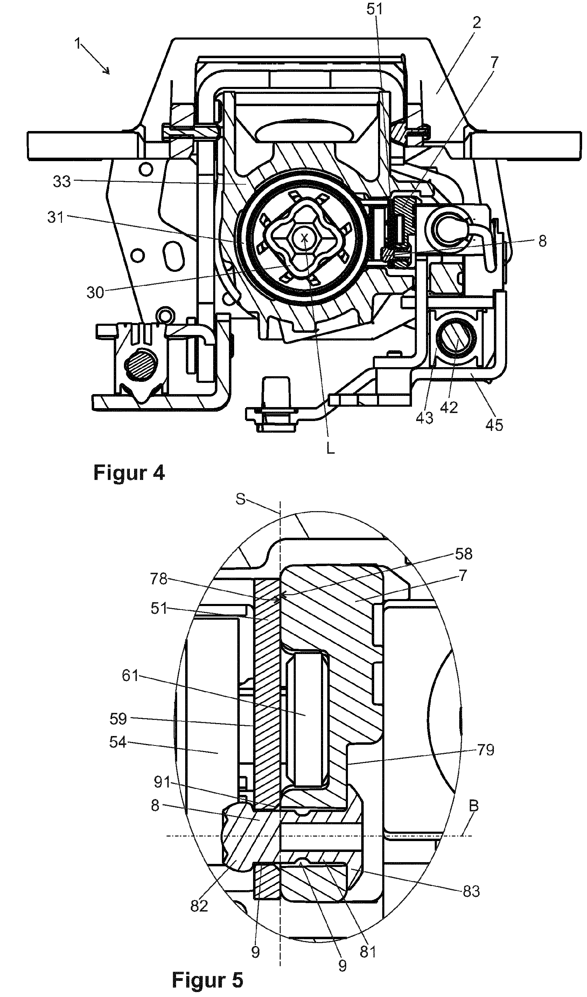

Ein Scherniet 8, der ein erfindungsgemäßes Scherelement bildet, ist durch eine quer zur Längsachse L durch die Trägerplatte 7 und das Gehäuse 51 durchgehende Öffnung 9 hindurchgeführt, welche im Beispiel als Bohrung mit kreisrundem Durchgangsquerschnitt mit einer Bohrungsachse B ausgebildet ist. Durch den Scherniet 8 ist die Trägerplatte 7 im Normalbetrieb mit dem Gehäuse 51 verbunden, wobei die Kontaktflächen 58 und 78 in der Scherebene S gegeneinander anliegen, wie in den Querschnittsdarstellungen der Figuren 4, 5, 6, 8, 10, 11 und 12 erkennbar ist.

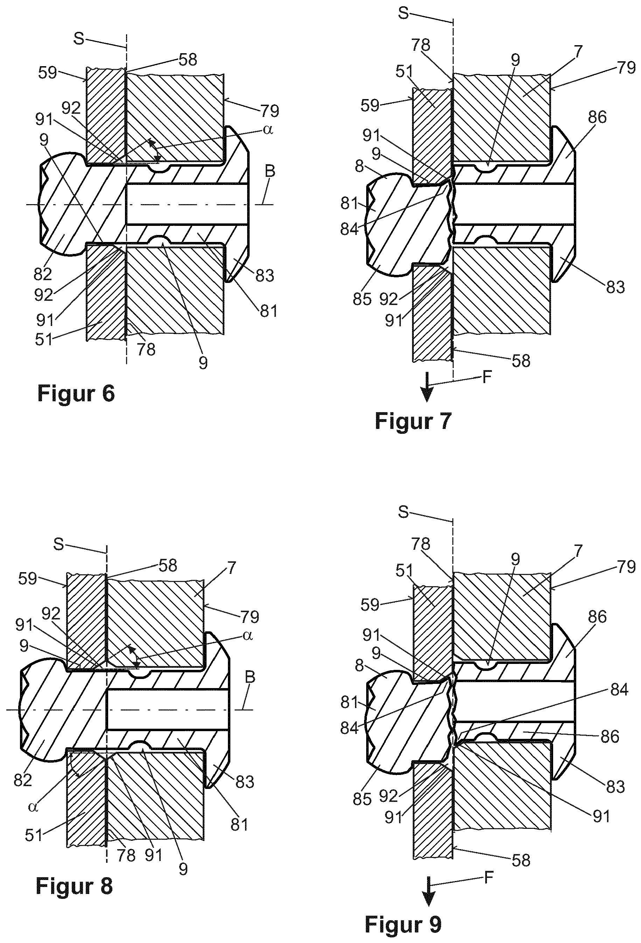

Figur 5 zeigt einen nicht erfindungsgemäßen vergrößerten Teil des Gesamtquerschnitts von Figur 4. In den Figuren 6 bis 12 sind schematisch nur die Elemente Scherniet 8, Trägerplatte 7 und Gehäuse 51 gezeigt.

Der Scherniet 8 hat einen sich durch die Öffnung 9 hindurch erstreckenden Nietschaft 81, auch kurz als Schaft bezeichnet, der einen kreiszylindrischen, den Öffnungsquerschnitt im Wesentlichen ausfüllenden Nietquerschnitt hat, so dass zwischen dem Nietschaft 81 und der Innenfläche der Öffnung 9 nur geringes Spiel besteht, welches nur einen Bruchteil des Nietschaft- bzw. Öffnungsdurchmessers beträgt.

Mit einem ersten Nietkopf 82 stützt sich der Scherniet 8 außen gegen eine der Kontaktfläche 58 abgewandte Außenfläche 59 des Gehäuses 51 ab, und mit einem zweiten Nietkopf 83 von außen gegen eine der Kontaktfläche 78 abgewandte Außenfläche 79 der Trägerplatte 7. Durch den Scherniet 8 sind die Kontaktfläche 58 des Gehäuses 51 und die Kontaktfläche 78 der Trägerplatte 7 in der Scherebene gegeneinander verspannt.

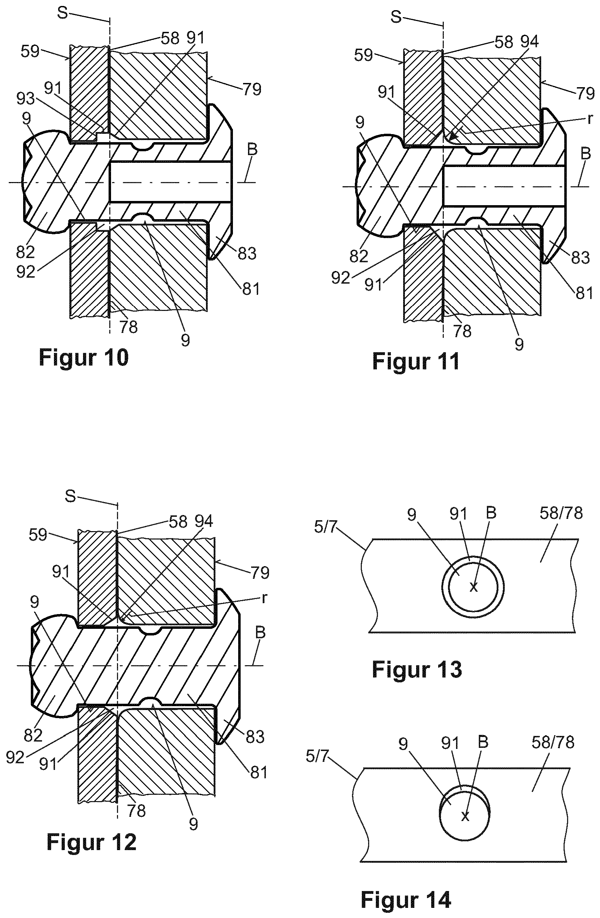

Der Scherniet 8 kann als Hohl- oder Halbhohlniet wie in den Figuren 6 bis 11, oder auch als Vollniet wie in Figur 12 dargestellt ausgestaltet sein.

In der in Figur 6 gezeigten nicht erfindungsgemäßen Ausführung weist die Öffnung 9 in dem Gehäuse 51 in mindestens einem an eine Kontaktfläche 58 angrenzenden Randbereich eine umlaufende Fase auf, so dass eine konisch-trichterförmige, zur Kontaktfläche hin offene Aufweitung 91 ausgebildet wird. Die Fase schließt mit der Bohrungsachse B einen Fasenwinkel α (alpha) von bevorzugt größer oder gleich 20° ein, bevorzugt von 30°. Zwischen der zylindrischen Außenfläche des Nietschafts 81 und der konischen Innenfläche der Aufweitung 91 wird ein ringförmiger freier Verformungsraum 92 begrenzt.

Die Trägerplatte 7 ist über den Verstellantrieb 4 und die Außenmanteleinheit 33 mittels der Trageinheit 2 an der Karosserie des Kraftfahrzeugs abgestützt, und das Gehäuse 51 an dem Innenmantelrohr 31. Im Crashfall wird impulsartig eine hohe Kraftspitze, die sogenannte Crashkraft F, über die Lenkspindel 30 auf das Innenmantelrohr 31 übertragen, welche als Scherkraft F parallel zur Scherebene S zwischen dem Gehäuse 51 und der Trägerplatte 7 wirkt, wie in Figur 7 dargestellt. Im Crashfall wird das Innenmantelrohr 31 zusammen mit dem Gehäuse 51 relativ gegenüber der Trägerplatte 7 verlagert. Dadurch wird das Scherelement 8 auf Scherung belastet, und dadurch im Bereich der Aufweitung 9 umgeformt. Konkret fließt das Material des Scherelements 8 etwa in Richtung der Scherebene S in den freien Verformungsraum 92 - in der Darstellung von Figur 7 nach oben - und bildet dort einen plastisch geformten Haltegrat 84, der den durch die Aufweitung zur Verfügung gestellten Verformungsraum 92 zumindest teilweise quer zur Bohrungsachse B ausfüllt.

Durch die weitere relative Bewegung wird das Scherelement 8 in der Scherebene S abgeschert, und in zwei separate Schernietfragmente 85, 86, kurz Fragmente 85, 86 geteilt.

In der nicht erfindungsgemäßen Figur 7 ist das Schernietfragment 85 durch den quer zur Bohrungsachse B in die Aufweitung 91 vorstehenden Haltegrat 84 in der Durchgangsrichtung der Bohrung 9 fixiert und gegen Herausfallen nach außen gesichert. Der Haltegrat 84 bildet ein in Durchgangsrichtung der Öffnung 9 wirksames Formschlusselement, welches beim Abscheren erzeugt wurde.

Um das zweite Schernietfragment gegen Herausfallen aus der Öffnung 9 der Trägerplatte 7 zu sichern, kann die Öffnung 9 in der Trägerplatte 7 in mindestens einem an eine Kontaktfläche 78 angrenzenden Randbereich ebenfalls eine Aufweitung 91 in Form einer umlaufenden Fase aufweisen, wodurch im Prinzip in der Trägerplatte 7 ein Verformungsraum 92 ausgebildet wird, der zu dem Verformungsraum 92 in dem Gehäuse 51 bezüglich der Scherebene S spiegelsymmetrisch ist. Diese Anordnung ist als zweite Variante in Figur 8 in derselben Ansicht wie in Figur 6 gezeigt. Jedoch ist eine spiegelsymmetrische Ausbildung des Verformungsraums 92 nicht wesentlich für die Funktionsgewährleistung. Dieser kann auch kleiner oder größer als der andere Verformungsraum sein oder eine andere Geometrie aufweisen.

Figur 9 zeigt analog zu der nicht erfindungsgemäßen Figur 7 den abgescherten Zustand. Das Schernietfragment 85 weist wie in der nicht erfindungsgemäßen Figur 7 einen Haltegrat 84 auf, in der Zeichnung am oberen Rand des Nietschafts 81. Auch das - in der Zeichnung rechts liegende - Schernietfragment 86 ist vor dem Abscheren plastisch umgeformt worden, so dass ein - in der Zeichnung am unteren Rand - in den von der Aufweitung 91 begrenzten Verformungsraum 92 hineinragender Haltegrat 84 ausgebildet wurde. Dadurch ist das Schernietfragment 86 in der Öffnung 9 formschlüssig an der Trägerplatte 7 gehalten und gesichert.

Die in Figur 10 gezeigte dritte Variante unterscheidet sich von der Ausführung gemäß Figur 8 dadurch, dass die Aufweitung 91 in dem Gehäuse 51 als Stufenbohrung mit einem zum Durchgangsquerschnitt vorspringenden Absatz 93. Dadurch ist der Verformungsraum 92 ringförmighohlzylindrisch.

Die in Figur 11 gezeigte vierte Variante unterscheidet sich von der Ausführung gemäß Figur 8 dadurch, dass die Aufweitung 91 in der Trägerplatte 7 nicht wie in Figur 8 als konische Fase, sondern im Querschnitt bogenförmig als Rundung 94 des Randes ausgebildet ist, mit einem Radius r größer gleich 0,5 mm.

Die in Figur 12 gezeigte Ausführung unterscheidet sich zu den vorigen Varianten dadurch, dass der Scherniet 8 als Vollniet ausgeführt ist. Selbstverständlich können die anderen Ausführungsvarianten der Figuren 1 bis 11 mit einem Vollniet anstelle eines Hohlniets ausgeführt sein. Der Fachmann wählt den Niet entsprechend so aus, dass die von ihm gewählte und vordefinierte Scherkraft durch diesen gewählten Niet erreicht wird.

Die Figuren 13 und 14 zeigen Ansichten in Normalenrichtung auf die Kontaktflächen 58 oder 78. In der Ausführung von Figur 13 läuft die Aufweitung 91 über den gesamten Umfang der Öffnung 9 um, während in Figur 14 die Aufweitung 91 nur partiell in dem Umfangsbereich ausgebildet ist, in dem beim Crash durch die Crashkraft F der Haltegrat 84 an den Schernietfragmenten 85 und/oder 86 plastisch umgeformt wird. Die in den Figuren 1 bis 12 dargestellten Ausführungsvarianten lassen sich sowohl mit einer vollumfänglichen Aufweitung als auch mit einer partiellen Aufweitung realisieren. Die Geometrie der Aufweitung ist dann entsprechend vollumfänglich oder partiell umfänglich ausgebildet, wobei auch eine Kombination denkbar und möglich ist, nämlich dass die eine Aufweitung des einen Bauteils vollumfänglich ausgebildet ist und die Aufweitung des anderen Bauteils partiell umfänglich ausgebildet ist.

### Bezugszeichenliste

1 Lenksäule
2 Trageinheit
21 Befestigungsmittel
30 Lenkspindel
31 Innenmantelrohr
310 Aufnahmeöffnungen
32 Befestigungsabschnitt
33 Außenmanteleinheit
4 Verstellantrieb
41 Antriebseinheit
42 Gewindespindel
43 Spindelmutter
45 Stützelement
5 Energieabsorptionseinrichtung
51 Gehäuse
510 Formschlusselemente
52 Schlitz
54, 56 Energieabsorptionselement
544, 564 Mitnehmerhaken
546, 566 Widerlager
57 Öffnung
58 Kontaktfläche
59 Außenfläche
60, 61 Koppelelement
62 pyroelektrischer Aktuator
7 Trägerplatte
78 Kontaktfläche
8 Scherniet
81 Nietschaft
82, 83 Nietkopf
84 Haltegrat
85, 86 Schernietfragmente
9 Öffnung
91 Aufweitung
92 Verformungsraum
93 Absatz
L Längsachse
H Höhenrichtung
S Scherebene
B Bohrungsachse

### Bezugszeichenliste

1 Lenksäule
2 Trageinheit
21 Befestigungsmittel
30 Lenkspindel
31 Innenmantelrohr
310 Aufnahmeöffnungen
32 Befestigungsabschnitt
33 Außenmanteleinheit
4 Verstellantrieb
41 Antriebseinheit
42 Gewindespindel
43 Spindelmutter
45 Stützelement
5 Energieabsorptionseinrichtung
51 Gehäuse
510 Formschlusselemente
52 Schlitz
54, 56 Energieabsorptionselement
544, 564 Mitnehmerhaken
546, 566 Widerlager
57 Öffnung
58 Kontaktfläche
59 Außenfläche
60, 61 Koppelelement
62 pyroelektrischer Aktuator
7 Trägerplatte
78 Kontaktfläche
8 Scherniet
81 Nietschaft
82, 83 Nietkopf
84 Haltegrat
85, 86 Schernietfragmente
9 Öffnung
91 Aufweitung
92 Verformungsraum
93 Absatz
L Längsachse
H Höhenrichtung
S Scherebene
B Bohrungsachse

## Patentansprüche

1. Lenksäule (1) für ein Kraftfahrzeug, mit einer Crashvorrichtung, die mindestens zwei Bauteile (51, 7) aufweist, welche einander zugewandte Flächen (58, 78) aufweisen, wobei die zumindest zwei Bauteile (51, 7) mittels eines Scherniets (8) miteinander verbunden sind, welches in einer die Bauteile (51, 7) durchsetzenden Öffnung (9) angeordnet ist, so dass bei einer relativen Bewegung der Bauteile (51, 7) zueinander der Scherniet (8) entzweit wird,
wobei die Öffnung (9), in mindestens einem an einer der Flächen (58, 78) angrenzenden Randbereich, eine sich zumindest über einen Umfangsteilbereich erstreckende, eine zu der jeweiligen anderen Fläche (58, 78) hin offene Aufweitung (91) aufweist, wobei die Flächen (58, 78) als Kontaktflächen ausgebildet sind, die in einer Scherebene (S) gegeneinander anliegen, wobei die Öffnung (9) die beiden Bauteile (51, 7) quer zur Scherebene (S) durchsetzt,
**dadurch gekennzeichnet,**
**dass** Aufweitungen (91) auf den beiden einander gegenüberliegenden Kontaktflächen (58, 78) beider Bauteile (51, 7) vorgesehen sind

2. Lenksäule nach Anspruch 1, **dadurch gekennzeichnet, dass** die Öffnung (9) einen zumindest abschnittweise im Wesentlichen gleichbleibenden Durchgangsquerschnitt hat, der im Bereich der Aufweitung (91) zur Kontaktfläche (58, 78) hin vergrößert ist.

3. Lenksäule nach einem der vorangehenden Ansprüche, **dadurch gekennzeichnet, dass** die Aufweitung eine Fase (91) und/oder eine Rundung (94) und/oder einen Absatz (93) aufweist.

4. Lenksäule nach Anspruch 3, **dadurch gekennzeichnet, dass** die Fase (91) mit einer Öffnungsachse (B) der Öffnung einen Fasenwinkel (α) von größer oder gleich 20° einschließt.

5. Lenksäule nach einem der vorangehenden Ansprüche, **dadurch gekennzeichnet, dass** die Öffnung als Bohrung (9) mit kreisrundem Querschnitt ausgebildet ist.

6. Lenksäule nach einem der vorangehenden Ansprüche, **dadurch gekennzeichnet, dass** das eine Bauteil (51) mit einer eine Lenkspindel (30) drehbar lagernden Manteleinheit (31) verbunden ist, und das andere Bauteil (7) mit einer die Manteleinheit (31) tragenden, mit der Karosserie eines Kraftfahrzeugs verbindbaren Trageinheit (33) verbunden ist.

7. Lenksäule nach einem der vorangehenden Ansprüche, **dadurch gekennzeichnet, dass** der Scherniet (8) zumindest im Bereich der Scherebene (S) aus einem Material ausgebildet ist, welches eine geringere Festigkeit als das Material zumindest eines der Bauteile (51, 7) hat.

8. Lenksäule nach einem der vorangehenden Ansprüche, **dadurch gekennzeichnet, dass** zwischen den Bauteilen (51, 7) ein Energieabsorptionselement (54, 56) angeordnet ist.

9. Verfahren zum Betrieb einer Lenksäule für ein Kraftfahrzeug nach einem der vorangehenden Ansprüche, wobei beim Überschreiten einer vorgegebenen, zwischen den Bauteilen (58, 78) wirkenden Crashkraft (F) ein Scherniet (8) abgeschert und in zwei Scherelementfragmente (85, 86) zerteilt wird,
**gekennzeichnet dadurch,**
**dass** zumindest eines der Scherelementfragmente (85, 86) plastisch eingeformt wird in eine in mindestens einem an eine Fläche (58, 78) angrenzenden Randbereich der Öffnung (9) ausgebildete Aufweitung (91), zur Bildung eines Haltegrats (84), der einen in Durchgangsrichtung der Öffnung (9) wirksamen Formschluss zwischen dem Scherelementfragment (85, 86) und dem Bauteil (51, 7) erzeugt.

## Claims

1. A steering column (1) for a motor vehicle, having a crash device which has at least two components (51, 7) which have mutually facing surfaces (58, 78), wherein the at least two components (51, 7) are connected to each other by means of a shear rivet (8) which is arranged in an opening (9) passing at least partially through the components (51, 7), such that the shear rivet (8) is broken in two if the components (51,7) move relative to each other,
wherein the opening (9) has, in at least one edge region bounding one of the surfaces (58, 78), a widened portion (91) which extends at least over a partial circumferential region and is open towards the respective other surface (58, 78),
wherein the surfaces (58, 78) are configured as contact surfaces which lie against one another in a shear plane (S), wherein the opening (9) passes through the two components (51, 7) transversely to the shear plane (S),
**characterized in that.**
widened portions (91) are provided on both contact surfaces (58, 78) of both components (51, 7) which lie against one another.

2. The steering column as claimed in claim 1, **characterized in that** the opening (9) has at least in some sections a substantially uniform passage cross section which is enlarged in the region of the widened portion (91) towards the contact surface (58, 78).

3. The steering column as claimed in one of the preceding claims, **characterized in that** the widened portion has a chamfer (91) and/or a rounding (94) and/or a shoulder (93).

4. The steering column as claimed in claim 3, **characterized in that** the chamfer (91) encloses with an opening axis (B) of the opening a chamfer angle (α) which is greater than or equal to 20°.

5. The steering column as claimed in one of the preceding claims, **characterized in that** the opening is configured as a bore (9) with a circular cross section.

6. The steering column as claimed in one of the preceding claims, **characterized in that** the one component (51) is connected to a jacket unit (31) rotatably mounting a steering spindle (30) and the other component (7) is connected to a support unit (33) bearing the jacket unit (31) and connectable to the body of a motor vehicle.

7. The steering column as claimed in one of the preceding claims, **characterized in that** the shear rivet (8) is configured at least in the region of the shear plane (S) from a material which has a lower strength than the material of at least one of the components (51, 7).

8. The steering column as claimed in one of the preceding claims, **characterized in that** an energy absorption element (54, 56) is arranged between the components (51, 7).

9. A method for operating a steering column for a motor vehicle as claimed in one of the preceding claims, wherein a shear rivet (8) is sheared off and divided into two shear element fragments (85, 86) when a predetermined crash force (F) acting between the components (58, 78) is exceeded,
**characterized in that**
at least one of the shear element fragments (85, 86) is plastically shaped into a widened portion (91) configured in at least one edge region of the opening (9) bounding a surface (58, 78), in order to form a retaining edge (84) which produces a positive connection which acts in the direction of passage of the opening (9) between the shear element fragment (85, 86) and the component (51, 7).

## Revendications

1. Colonne de direction (1) pour un véhicule automobile, avec un dispositif de collision qui présente au moins deux composants (51, 7) qui présentent des surfaces (58, 78) tournées l'une vers l'autre, les au moins deux composants (51, 7) étant reliés l'un à l'autre au moyen d'un rivet à cisaillement (8) qui est disposé dans une ouverture (9) traversant les composants (51, 7), de sorte que lors d'un mouvement relatif des composants (51, 7) l'un par rapport à l'autre, le rivet à cisaillement (8) est divisé en deux, l'ouverture (9) présentant, dans au moins une zone de bord adjacente à l'une des surfaces (58, 78), un élargissement (91) s'étendant au moins sur une partie de la périphérie et ouvert vers l'autre surface respective (58, 78),
les surfaces (58, 78) étant conçues comme des surfaces de contact qui s'appliquent l'une contre l'autre dans un plan de cisaillement (S), l'ouverture (9) traversant les deux composants (51, 7) transversalement au plan de cisaillement (S),
**caractérisé en ce que**
**en ce que** des évasements (91) sont prévus sur les deux surfaces de contact (58, 78) opposées l'une à l'autre des deux composants (51, 7)

2. Colonne de direction selon la revendication 1, **caractérisée en ce que** l'ouverture (9) a une section de passage essentiellement constante au moins par sections, qui est agrandie dans la zone de l'élargissement (91) vers la surface de contact (58, 78).

3. Colonne de direction selon l'une des revendications précédentes, **caractérisée en ce que** l'évasement présente un chanfrein (91) et/ou un arrondi (94) et/ou un épaulement (93).

4. Colonne de direction selon la revendication 3, **caractérisée en ce que** le chanfrein (91) forme avec un axe d'ouverture (B) de l'ouverture un angle de chanfrein (α) supérieur ou égal à 20°.

5. Colonne de direction selon l'une des revendications précédentes, **caractérisée en ce que** l'ouverture est réalisée sous la forme d'un alésage (9) de section circulaire.

6. Colonne de direction selon l'une des revendications précédentes, **caractérisée en ce que** l'un des composants (51) est relié à une unité d'enveloppe (31) supportant en rotation un arbre de direction (30), et l'autre composant (7) est relié à une unité de support (33) portant l'unité d'enveloppe (31) et pouvant être reliée à la carrosserie d'un véhicule automobile.

7. Colonne de direction selon l'une des revendications précédentes, **caractérisée en ce que** le rivet à cisaillement (8) est réalisé, au moins dans la zone du plan de cisaillement (S), dans un matériau qui a une résistance inférieure à celle du matériau d'au moins l'un des composants (51, 7).

8. Colonne de direction selon l'une des revendications précédentes, **caractérisée en ce qu'**un élément d'absorption d'énergie (54, 56) est disposé entre les composants (51, 7).

9. Procédé de fonctionnement d'une colonne de direction pour un véhicule automobile selon l'une des revendications précédentes, dans lequel, en cas de dépassement d'une force de collision (F) prédéfinie agissant entre les composants (58, 78), un rivet de cisaillement (8) est cisaillé et divisé en deux fragments d'éléments de cisaillement (85, 86),
**caractérisé en ce que**
**en ce qu'**au moins l'un des fragments d'élément de cisaillement (85, 86) est formé plastiquement dans un élargissement (91) réalisé dans au moins une zone de bord de l'ouverture (9) adjacente à une surface (58, 78), pour former un demi-intégrat (84) qui produit une liaison par la forme entre le fragment d'élément de cisaillement (85, 86) et le composant (51, 7), efficace dans le sens de passage de l'ouverture (9).
